# EUROPEAN PATENT SPECIFICATION

(11) **EP 2 607 181 B1**
(45) Date of publication and mention of the grant of the patent: **07.02.2018**
(21) Application number: 12198074.2
(22) Date of filing: 19.12.2012
(51) Int. Cl.: B60R 21/16, B60N 2/44, B60N 2/66, B60N 2/68

(54) **Vehicle seat**
Fahrzeugsitz
Siège de véhicule

(30) Priority: 20.12.2011 JP 2011278729
(43) Date of publication of application: 26.06.2013
(73) Proprietor: Honda Motor Co., Ltd., Tokyo 107-8556 (JP)
(72) Inventor: Kikuchi, Masato, Shioya-gun, Tochigi 329-1217 (JP); Mochizuki, Haruki, Shioya-gun, Tochigi 329-1217 (JP); Yoshida, Hajime, Shioya-gun, Tochigi 329-1217 (JP); Yoshiuchi, Shuto, Wako-chi, Saitama 351-0193 (JP); Kikuchi, Nobukazu, Wako-chi, Saitama 351-0193 (JP)
(74) Representative: Plougmann Vingtoft a/s

(56) References cited:
- EP-A1- 1 080 994
- DE-A1-102008 029 339
- JP-A- 2010 235 021
- US-A- 6 129 419
- US-A1- 2010 117 414

## Description

The present invention relates to a vehicle seat having a support device with which an occupant's lumbar region support position is adjustable (see, for example, US 2010/0117414 A1, which corresponds to the preamble of claim 1). A vehicle seat having a support device with which an occupant's lumbar region support position can be adjusted by regulating an inflation pressure of a pneumatic support cushion provided inside the seat is known in the art (see JP 2010-235021 A). In this seat, an inflation pressure control unit for regulating the inflation pressure of the pneumatic support cushion, and a valve unit are provided under a seat cushion.

A harness, a hose and the like are connected to the control unit for regulating the inflation pressure of the pneumatic support cushion. It would thus be desirable that the control unit should be installed securely and robustly so as not to move due to vibrations or the like.

It is an object of the present invention to provide a vehicle seat in which the control unit can be installed securely and robustly. According to the invention, a vehicle seat having a seat body including a seat bottom and a seat back is provided having the technical features set forth in independent claim 1, with optional features thereof being disclosed in the dependent claims. The vehicle seat comprises: left and right side frames which constitute left and right frames of the seat body; and a support device which is disposed inside the seat body and with which an occupant's lumbar region support position is adjustable. The support device includes: a pneumatic support cushion configured to be inflatable and deflatable to change the support position; a pump configured to supply gas to the pneumatic support cushion; and a control unit configured to regulate an inflation quantity of the pneumatic support cushion. The control unit is attached to at least one of the left and right side frames.

With this configuration, a side frame that constitutes the frame of the seat body and thus has a high rigidity is utilized as a frame to which the control unit is attached. Therefore, the control unit can be installed securely and robustly.

Additionally, the vehicle seat configured as described above may further comprise an air bag device which is attached to one of the left and right side frames, and the control unit may be attached to the other of the left and right side frames. With this feature, the control unit and the air bag device can be arranged without a risk of interfering with each other. Moreover, unlike an alternative arrangement in which the control unit and the air bag device are attached to one and the same side frame, arrangement of the control unit and the air bag device can be designed with increased flexibility, and compact layout of the control unit and the air bag device can be achieved.

Alternatively, in the vehicle seat configured as described above and further comprising an air bag device which is attached to one of the left and right side frames, the control unit may be attached to the one of the left and right side frames, in a position adjacent to, and over or under the air bag device. With this feature, the risk of the control unit and the air bag device interfering with each other can also be reduced, because the control unit and the air bag are attached to the side frame, one in an upper position, and the other in a lower position. Furthermore, one of the control unit and the air bag device which is attached later can be attached with ease, and thus the assembly of the vehicle seat can be performed with increased ease.

In the above configuration, with or without the additional features mentioned above, in which the left and right side frames are configured as left and right seat back side frames which constitute left and right frames of the seat back, the control unit is attached to an outer side of the at least one of the left and right seat back side frames, and the plurality of pneumatic support cushions is attached to an inner side of the at least one of the left and right seat back side frames to which the control unit is attached. With this configuration, the control unit and the pneumatic support cushion can be arranged compactly, and the risk of interference during assembly can be reduced.

In addition, the control unit and the pneumatic support cushion may be arranged such that the at least one of the left and right seat back side frames to which the control unit and the pneumatic support cushions are attached are sandwiched between the control unit and the pneumatic support cushions. In this arrangement, the distance between the control unit and the pneumatic support cushions can be shortened, and thus the routing of a hose can be performed with increased ease, and the length of the hose can be shortened.

In the above configuration, with or without the additional features mentioned above, the at least one of the left and right side frames to which the control unit is attached may have a recessed portion which is recessed away as viewed from a side on which the control unit is attached, and the control unit may be attached to the at least one of the left and right side frames by fastening in a position outside the recessed portion. With this additional feature, the control unit can be attached relatively easily. Also, the rigidity of the side frame can be enhanced, and the control unit can be installed securely and thus more robustly.

The vehicle seat configured as described above, with or without the additional features mentioned above, may further comprise: a pressure-receiving member disposed between the left and right side frames configured as left and right seat back side frames which constitute left and right frames of the seat back, the pressure-receiving member being configured to be movable rearward relative to the left and right seat back side frames; and left and right brackets which are fixed to the left and right seat back side frames, respectively, and to which the pressure-receiving member is attached through an attachment member, wherein the control unit is attached to the at least one of the left and right side frames by fastening in a position outside portions to which the brackets are fixed. With this configuration, the control unit can be attached to the side frame relatively easily.

The above aspect and advantages, other advantages and further features of the present invention will become more apparent by describing in detail illustrative, non-limiting embodiments thereof with reference to the accompanying drawings, in which:
FIG. 1 is a perspective view of a vehicle seat according to one embodiment;

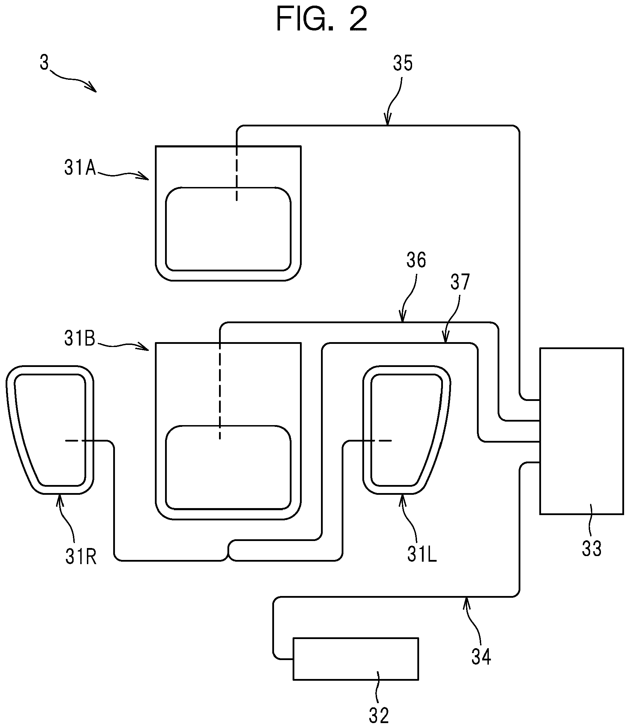

FIG. 2 is a schematic view of a support device;
FIG. 3 is a perspective view showing a frame structure of the vehicle seat;
FIG. 4 is perspective view of a potion of the vehicle seat including a pressure-receiving member as viewed from an obliquely right and front side;
FIG. 5 is a view of a left seat back side frame and a side bracket as viewed from a laterally inner side;
FIG. 6 is an exploded perspective view of the left seat back frame, an attachment bracket, a control unit, an inner cover member and an outer cover member;
FIG. 7A is a perspective view of a portion of the vehicle seat including the control unit as viewed from an obliquely left and rear side;
FIG. 7B is an enlarged perspective view of a holding member shown in FIG. 7A;
FIG. 8 is a sectional view of a cover member and an associated structure;
FIG. 9 is a sectional view taken along line X-X of FIG. 8; and
FIG. 10 is a perspective view of a vehicle seat according to a modified embodiment not forming part of the invention.
A detailed description will be given of an illustrative embodiment of the present invention with reference to the drawings. In describing the embodiment, the front/rear, left/right (lateral) and upper/lower (upward/downward) directions are designated as from the viewpoint of an occupant who is sitting on the seat.

### GENERAL STRUCTURE OF VEHICLE SEAT

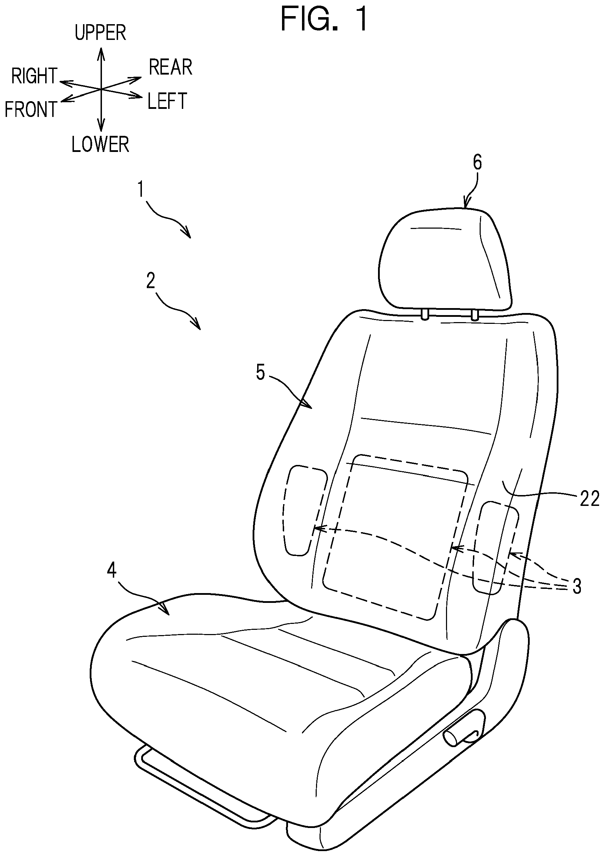

As shown in FIG. 1, a vehicle seat 1 has a seat body 2, and a support device 3, and is disposed inside the seat body 2. The vehicle seat 1 in this embodiment is a car seat for an automobile.

The seat body 2 principally includes a seat bottom 4, a seat back 5 and a head rest 6. The seat bottom 4 is configured to provide a seating for an occupant. The seat back 5 is fixed through a reclining mechanism to the seat bottom 4.

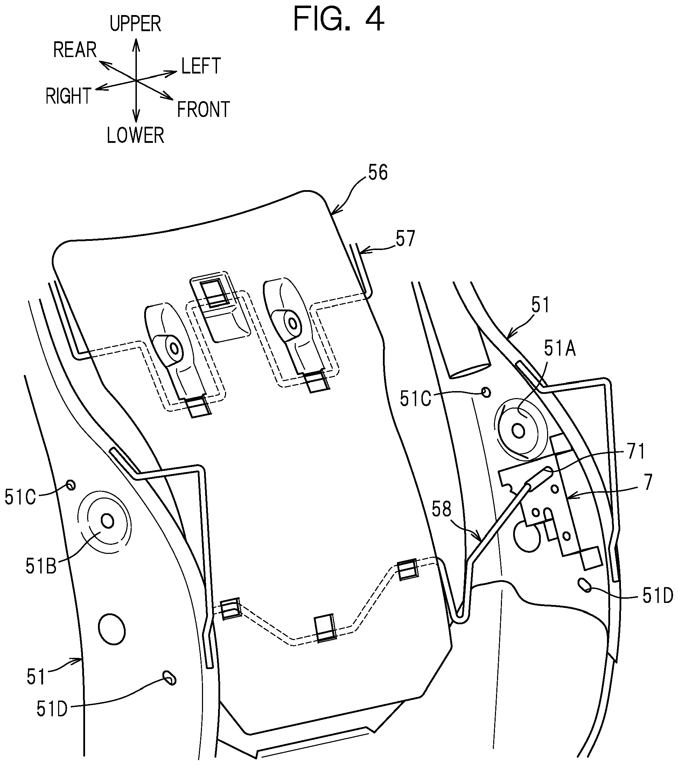

As shown in FIG. 4, the support device 3 principally includes pneumatic support cushions 31A, 31B for supporting an occupant's lumbar region from backward, pneumatic support cushions 31L, 31R for supporting the occupant's lumbar region from the left and from the right, a pump 32 configured to supply air (gas) to the pneumatic support cushions 31A, 31B, 31L, 31R, and a control unit 33 configured to regulate an inflation quantity of the pneumatic support cushions 31A, 31B, 31L, 31R. The pump 32 and the control unit 33 are connected to each other by a hose 34 for supplying air. The control unit 33 and the pneumatic support cushion 31A are connected to each other by a hose 35. The control unit 33 and the pneumatic support cushion 31B are connected to each other by a hose 36. The pneumatic support cushions 31L, 31R are connected to the control unit 33 by a hose 37 which is bifurcated at some midpoint.

The support device 3 in normal times retains the pump 32 nonoperational so that inflow of air into the pneumatic support cushions 31A, 31B, 31L, 31R and outflow of air from the pneumatic support cushions 31A, 31B, 31L, 31R are blocked by the valve unit in the control unit 33. When an occupant operates a controller (not shown), the pump 32 is activated, and the valve unit selectively opens valves according to the operation of the occupant to inflate and deform the corresponding pneumatic support cushions 31A, 31B, 31L and 31R. With any of the valves in the valve unit being in the open state, pressures exerted on the pneumatic support cushions 31A, 31B, 31L and 31R by the occupant cause the corresponding pneumatic support cushions 31A, 31B, 31L and 31R to be deflated and deformed. In this way, the occupant's lumbar region support positions can be changed (adjusted).

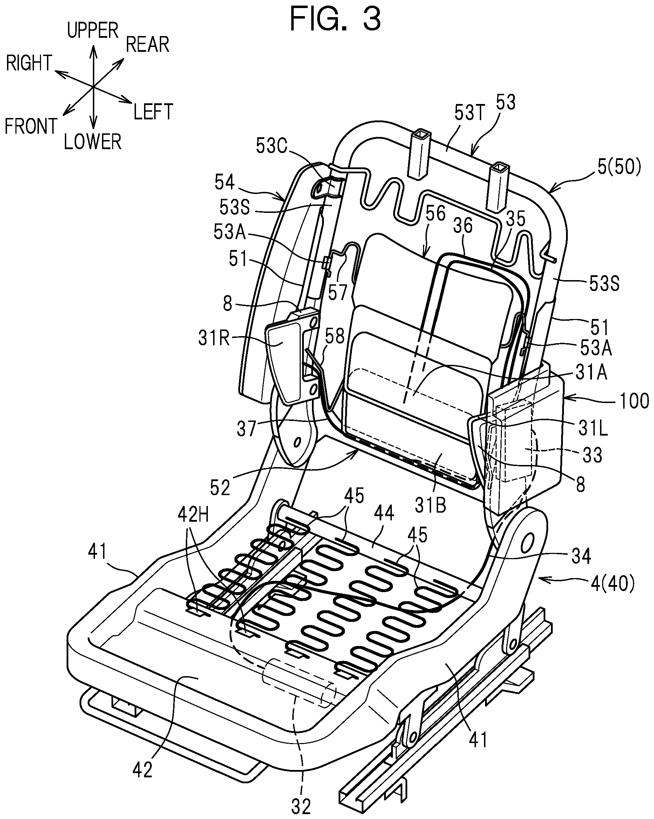

The seat bottom 4 and the seat back 5 include, as shown in FIG. 3, a seat bottom frame 40 and a seat back frame 50, the outside of which is covered with a cushion member (not shown) made of urethane foam or the like and a covering 22 *(see* FIG. 1) made of synthetic leather, cloth or the like.

### STRUCTURE OF SEAT BOTTOM

The seat bottom frame 40 principally includes left and right seat bottom side frames 41 which constitute left and right frames of the seat bottom 4, a pan frame 42, and a rear connecting pipe 44. Each of the seat bottom side frames 41 and the pan frame 42 is formed by press working from stamped metal sheet or the like.

The pan frame 42 is configured to extend laterally and connect front ends of the left and right seat bottom side frames 41. The rear connecting pipe 44 is configured to extend laterally and connect rear ends of the left and right seat bottom side frames 41. The pan frame 42 has hooked portions 42H, and seat springs 45 are extended between the hooked portions 42H and the rear connecting pipe 44 so that an occupant seated on the seat bottom 4 is supported by these seat springs 45.

### STRUCTURE OF SEAT BACK

The seat back 5 principally includes a seat back frame 50, an air bag device 54, and a pressure-receiving member 56. In the following description, the front/rear, and upper/lower (upward/downward) directions are designated from a view point of an occupant who is sitting on the vehicle seat 1 of which the seat back 5 is not in a position lowered by the reclining mechanism.

The seat back frame 50 principally includes left and right seat back side frames 51 which constitute left and right frames of the seat back 5 (left and right side frames which constitute left and right frames of the seat body 2), a plate-like member frame 52 configured to connect lower portions of the left and right seat back side frames 51, and a substantially U-shaped pipe frame 53 configured to connect upper portions of the left and right seat back side frames 51.

Each of the seat back side frames 51 and the member frame 52 is formed by press working from stamped metal sheet or the like.

The pipe frame 53 includes an upper connecting portion 53T extending laterally, and left and right side portions 53S extending downward from the left and right ends of the upper connecting portion 53T.

The air bag device 54 is a known device configured to develop in the event of a crash to protect an occupant at his/her side, and attached to the right side of the seat back frame 50. To be more specific, the air bag device 54 has an upper portion attached by fastening, *i.e.,* fastened to an attachment 53C fixed to the right side portion 53S of the pipe frame 53, and a lower portion attached by fastening, *i.e.,* fastened to the right seat back side frame 51 (one of the left and right side frames).

The pressure-receiving member 56 is a substantially rectangular plate-like member made of plastic or the like. The pressure-receiving member 56 is attached to seat back side frames 51 and the pipe frame 53, mainly through an upper portion connecting wire 57 and a lower portion connecting wire 58, and located between the left and right seat back side frames 51. To be more specific, the upper portion connecting wire 57 and the lower portion connecting wire 58 are engaged with a plurality of claws (not shown) provided on a rear side of the pressure-receiving member 56. Left and right end portions of the upper portion connecting wire 57 and the lower portion connecting wire 58 protruding out to the left and to the right, respectively, are bent so that the upper portion connecting wire 57 is connected to support tongues 53A fixed on the pipe frames 53, and the lower connecting wire 58 is attached to side brackets 7 as left and right brackets (only the left one is illustrated) fixed on inner surfaces of the seat back side frames 51, as shown in FIG. 4.

The pressure-receiving member 56 attached in a manner as described above is movable rearward relative to the seat back side frames 51 with the help of distortion of the bent end portions of the upper portion connecting wire 57 and the lower portion connecting wire 58 when a rearward load not less than a predetermined magnitude imposed by an occupant on the pressure-receiving member 56 in an event of a rear-end collision such that the vehicle is rear-ended or has a collision when being reversed. In this way, the upper part of the occupant's body is moved rearward and subsides into the seat back 5, so that the impact of the rear-end collision load against the occupant can be softened.

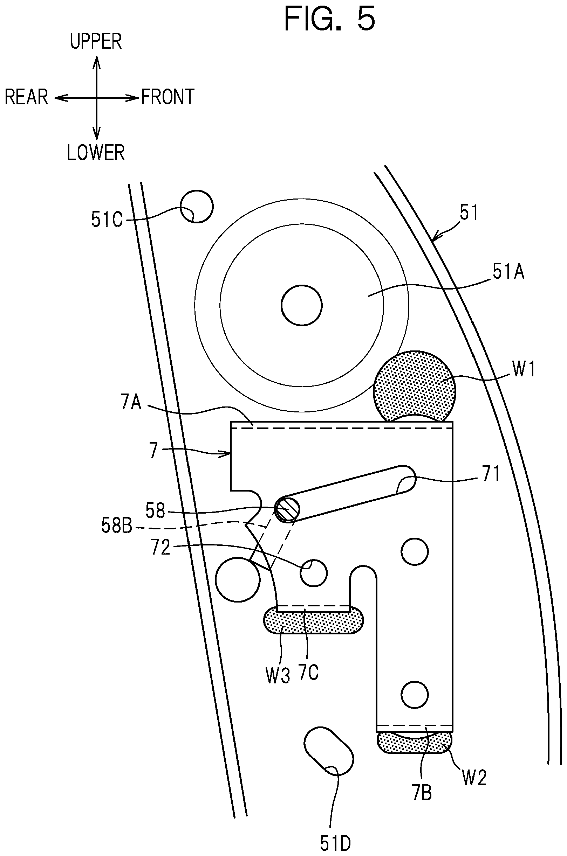

As shown in FIG. 5, each side bracket 7 is made of a metal plate, and shaped substantially like a letter L with its upper end portion protruding rearward as viewed from the side. An upper portion 7A, a front lower portion 7B and a rear lower portion 7C of the side bracket 7 are bent to a laterally outside (toward the seat back side frame 51), respectively. Three spots at a front end portion of the upper end portion 7A, a lower end of the front lower portion 7B and a lower end of the rear end portion 7C are fixed by welding on a lower region of an inner side of the seat back side frame 51.

A weld W1 is provided in an area partially covering a protruded portion 51A which is provided on the inner side of the seat back side frame 51 and configured to protrude laterally inwardly. This arrangement serves to enhance the robust attachment of the side bracket 7, and thus ensures that the pressure-receiving member 56 is stably supported.

The side bracket 7 principally has an elongate hole 71 in which an end portion 58B of the lower portion connecting wire 58 is engaged, and a fixing hole 72 to which one of the pneumatic support cushions 31L, 31R is fixed.

The elongate hole 71 is located in an upper portion of the side bracket 7 and shaped to extend in a frontward-and-rearward direction from a position between the weld W1 and the weld W2 toward a rear portion in which the weld W3 is provided. Since the portion of the side bracket 7 in which the lower portion connecting wire 58 is engaged is configured as such an elongate hole 72, an end portion 58B elongated in an upward-and-downward direction and bent substantially downward as shown in FIG. 5 can be relatively easily attached to the side bracket 7.

The fixing hole 72 is located in the upper portion of the side bracket 7 between the elongate hole 71 and the weld W3.

A right side bracket 7 fixed to the right seat back side frame 51 is formed laterally symmetrically to the left side bracket 7.

Each of the left and right seat back side frames 51 *(see* also FIG. 4) has through holes 51C, 51D for use in attaching the air bag device 54 or the control unit 33 to the seat back side frame 51, in a position outside the protruded portion 51A (recessed portion 51B that is recessed as viewed from outside) and the portion (welds W1-W3) to which the side bracket 7 is fixed. To be more specific, the through hole 51C is formed in a position obliquely rearward and upward of the protruded portion 51A (recessed portion 51B). The through hole 51D is formed in a position below the protruded portion 51A (recessed portion 51B) and rearward of the weld W2.

### STRUCTURE OF SUPPORT DEVICE

As shown in FIG. 3, the pneumatic support cushions 31A, 31B are provided in overlapping arrangement such that the pneumatic support cushion 31A is disposed at the front side and the pneumatic support cushion 31B is disposed at the rear side. The pneumatic support cushions 31A, 31B are disposed between the left and right seat back side frames 51 and attached to the pressure-receiving member 56. The pneumatic support cushions 31L, 31R are disposed inside plate members 8 each shaped substantially like a plate to restrict the inflation directions of the pneumatic support cushions 31L, 31R, respectively, and the plate members 8 are disposed inside the left and right seat back side frames 51, respectively. The pneumatic support cushions 31L, 31R are attached to the left and right side brackets 7, respectively. Each of the pneumatic support cushions 31A, 31B, 31L, 31R is formed of two plastic sheet-like members welded or otherwise joined together, and has an air chamber capable of being filled with air.

The pump 32 is disposed under the pan frame 42.

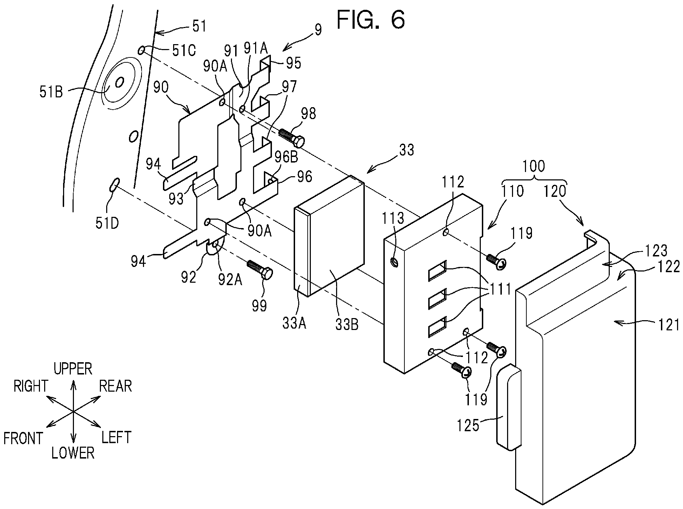

The control unit 33 is attached to a laterally outer (left) side of the left seat back side frame 51 via an attachment bracket 9 *(see* FIG. 6). To be more specific, the control unit 33 is disposed in a position such that the left seat back side frame 51 is held between the control unit 33 and the left pneumatic support cushion 31L. This control unit 33 is covered by a cover member 100 as will be described later.

The hose 34 extending from the pump 32 is routed to pass under the pan frame 42, the seat springs 45 and the rear connecting pipe 44, and directed rearward, passing at the rear side of the seat back frame 50, and connected to the rear side of the control unit 33.

The hose 35 extending from the rear side of the control unit 33 is directed toward a laterally inner side of the left seat back side frame 51 to pass along the left seat back side frame 51 upward, passing above the pressure-receiving member 56, and is drawn out to the front side of the pressure-receiving member 56, and connected to the pneumatic support cushion 31A. The hose 36 extending from the rear side of the control unit 33 is routed like the hose 35, drawn out to the front side of the pressure-receiving member 56, and connected to the pneumatic support cushion 31B.

The hose 37 extending from the rear side of the control unit 33 is directed toward a laterally inner side of the left seat back side frame 51 to pass along the left seat back side frame 51 downward, and passes in front of the member frame 52. This hose 37 is bifurcated at a position near a laterally midpoint of the member frame 52 into left and right portions extending to the left and right ends of the member frame 52, respectively, which left and right portions are routed to pass along the left and right seat back side frames 51 upward, and connected to the pneumatic support cushion 31L and the pneumatic support cushion 31R, respectively.

### STRUCTURE OF ATTACHMENT BRACKET

As shown in FIG. 6, the attachment bracket 9 is formed of a metal plate, and includes a main body 90 which is shaped substantially like a frame having an opening provided substantially at its center as viewed from the left or right side. The main body 90 has total three screw holes 90A of which one is located substantially at the center in the front-rear direction in its upper portion, and two are located substantially at the both ends in the front-rear direction in its lower portion. The attachment bracket 9 principally includes an upper fixing portion 91, a lower fixing portion 92, a projecting portion 93, a front extending portion 94, an upper support portion 95, a lower support portion 96, and a rear extending portion 97.

The upper fixing portion 91 is a rear upper portion of the main body 90, shaped to protrude laterally inward, and has a through hole 91A provided in a relatively upper position. The lower fixing portion 92 is configured to extend from a lower end of the main body 90 laterally inward, and then bent to extend downwardly. The downwardly extending portion of the lower fixing portion 92 has a through hole 92A.

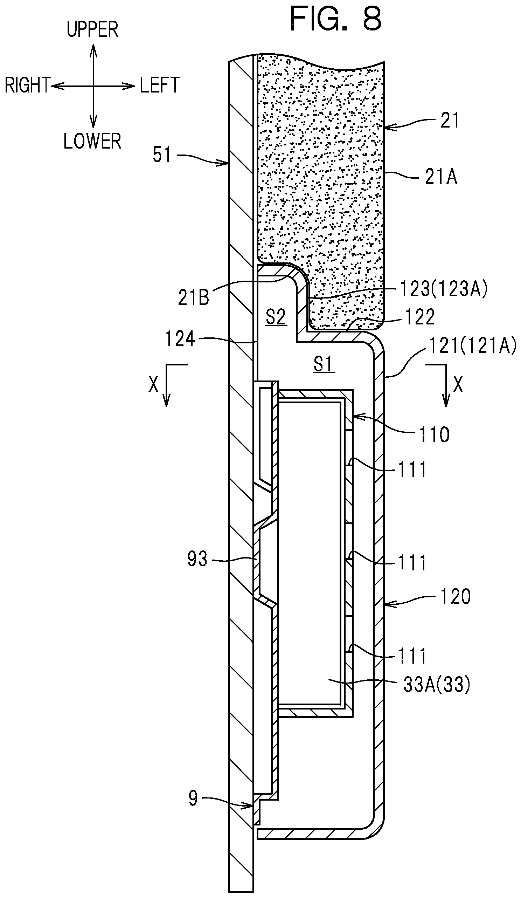

The projecting portion 93 is formed by bending a front portion of the main body 90 substantially at the center in the upward-and-downward direction so as to protrude laterally inward. This projecting portion 93 is in contact with a laterally outer side of the seat back side frame 51 *(see* FIG. 8).

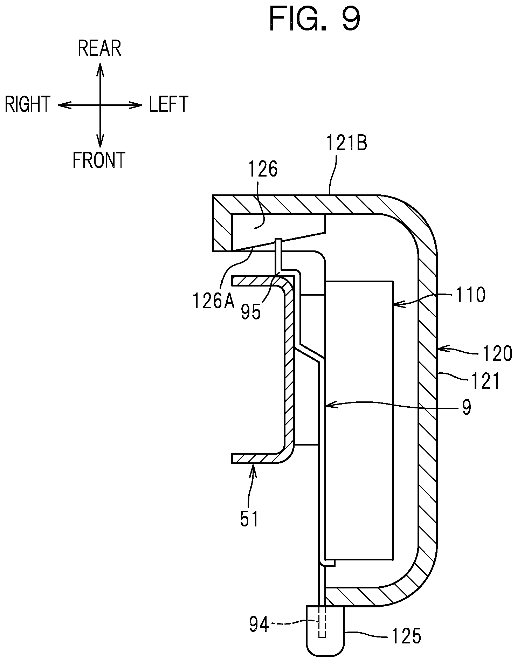

The front extending portion 94 is a portion extending frontward from a front end of the main body 90. Two front extending portions 94 are provided above and below the projecting portion 93. With these upper and lower front extending portions 94, an outer cover member 120 (its engaging portion 125) which will be described later is engaged *(see* FIG. 9).

The upper support portion 95 is configured to extend from an upper-end portion of a rear end of the main body 90 substantially toward rearward, then bent in a laterally inward direction, and further bent to extend rearward. An inner side (rib 126) of the outer cover member 120 is in contact with a rear end of the upper support portion 95 *(see* FIG. 9).

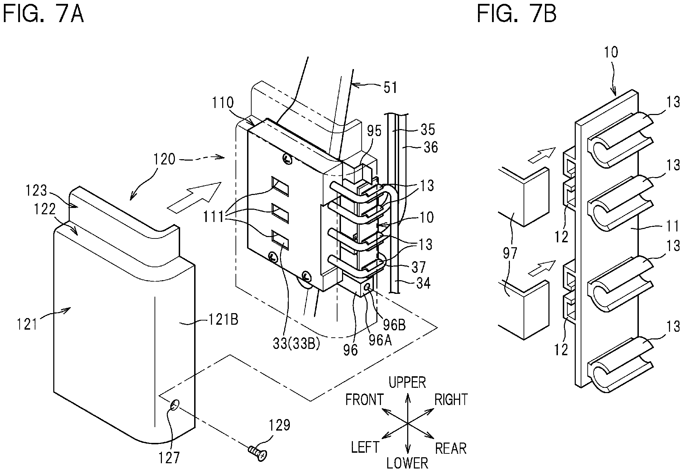

The lower support portion 96 is configured to extend from a lower-end portion of the rear end of the main body 90 toward rearward, and then bent to provide a rear side portion 96A (see FIG. 7A) extending in a laterally inward (rightward) direction. The rear side portion 96A of the lower support portion 96 has a screw hole 96B.

The rear extending portion 97 is a portion which extends rearward from the rear end of the main body 90 substantially at the center in the upward-and-downward direction thereof, and then is bent in a laterally inward (rightward) direction. Two rear extending portions 97 are provided of which one is located above the other. A holding member 10 shown in FIG. 7B is attached to end portions of the rear extending portions 97.

As shown in FIG. 7B, the holding member 10 made of plastic principally includes a base portion 11 shaped like a plate extending substantially in an upward-and-downward direction, a pair of upper and lower engageable portions 12 which are provided at a front side of the base portion 11 and configured to be engageable with the end portions of the rear extending portions 97, and four hose holding portions 13 which are provided at a rear side of the base portion 11 and shaped substantially like a letter C as viewed from the side. When the engageable portions 12 are engaged with the rear extending portions 97 and the holding member 10 is attached to the attachment bracket 9, the hose holding portions 13 are located between the upper support portion 95 and the lower support portion 96 of the attachment bracket 9, as shown in FIG. 7A. The hoses 34-37 are extending from the rear side of the control unit 33, bent in a laterally inward direction, and held in the hose holding portions 13, respectively. The hoses 34-37 extending from the hose holding portions 13 are routed to pass along a rear side of the left seat back side frame 51, and directed to a laterally inner side of this left seat back side frame 51.

### STRUCTURE OF COVER MEMBER

As shown in FIG. 6, the cover member 100 is configured to include an inner cover member 110 that is put over the control unit, and an outer cover member 120 that is put over the inner cover member 110. The inner and outer cover members 110, 120 are both made of plastic.

In the present embodiment, the cover member for covering the control unit is a member having a sufficient rigidity to resist change of its given shape such that the control unit can be protected from an outside force *(i.e.,* some deformation is permissible as long as the control unit can be protected). The cover member for use with this or other embodiments may not be a member, such as of a cushion material or a skin-like (covering) material, which covers the control unit but may become deformed largely by a force imposed from outside.

The inner cover member 110 is shaped like a box which opens to a seat back side frame 51 side (right side) and partially to a rear side, and configured to accommodate the control unit 33 inside. The inner cover member 110 principally has three windows 111 each shaped like a rectangle as viewed from the side and disposed in a left wall (designation by reference numeral is omitted) thereof, three through holes 112 provided in positions corresponding to the positions of the three screw holes 90A of the attachment bracket 9 in the left wall, and a vent 113 provided in an upper portion of a front wall (designation by reference numeral is omitted) thereof.

Each of the windows 111 is located to expose parts (side surfaces) of the valve unit 33B, which will be described later, of the control unit 33 so that the valve unit 33B installed inside the inner cover member 110 can be seen from outside.

Specific configuration of the control unit 33 will hereinafter be described briefly. The control unit 33 principally includes a control board 33A and a valve unit 33B.

The control board 33A is a circuit board configured to enable control over the valve unit 33B by regulating an electric current passed through a coil of each of solenoid valves (not shown) which constitute the valve unit 33B.

The valve unit 33B is a unit for controlling supplies of air to the pneumatic support cushions 31A, 31B, 31L, 31R, and is attached to the control board 33A. This valve unit 33B principally includes three solenoid valves (not shown) and one relief valve. To the solenoid valves, the hoses 35-37 are connected, respectively. Each solenoid valve principally includes a valve body which defines an airflow channel, a valve and a coil which are provided inside the valve body. Each solenoid valve is configured to have its airflow channel closed with its valve in normal times. When an occupant operates a controller (not shown) to pass an electric current to a coil of the solenoid valve for a designated pneumatic support cushion 31A, 31B, 31L, 31R so that the coil is energized, the associated valve is moved to open the relevant airflow channel so that air from the pump 32 is supplied to the designated pneumatic support cushion 31A, 31B, 31L, 31R. The solenoid valves may be configured such that the amount of movement of the valve *(i.e.,* the amount of opening and closing, or throttling, of the airflow channel) is adjustable by changing the amount of electric current passed to the coil. The relief valve is connected between the hose 34 and the three solenoid valves. The relief valve is configured to let air supplied from the pump 32 flow into the three solenoid valves when the pneumatic support cushions 31A, 31B, 31L, 31R are to be inflated, and to let air flowed in from the pneumatic support cushions 31A, 31B, 31L, 31R or air supplied from the pump 32 flow out to the outside when the pneumatic support cushions 31A, 31B, 31L, 31R are to be deflated.

The outer cover member 120 has a substantially L-shaped geometry as viewed from above, and is shaped like a box which opens to the seat back side frame 51 side (its right and front sides). This outer cover member 120 principally includes an outer sidewall portion 121 having a substantially L-shaped geometry as viewed from above, a connecting wall portion 122 extending from an upper edge of the outer sidewall portion 121 toward the seat back side frame 51 (inward), and an inner sidewall portion 123 extending from an inner edge of the connecting wall portion 122 upward (toward outside of the outer sidewall portion 121 which extends up to its upper edge, *i.e.,* above the upper edge of the outer sidewall portion 121).

The outer sidewall portion 121 and the inner sidewall portion 123 provide a stepped profile, and a step-and-riser portion formed at this stepped profile of the outer cover member 120 is contoured to be engaged with a recessed portion 21B formed at an end portion of a cushion member 21 which covers the seat back side frame 51, as shown in FIG. 8. The inner sidewall portion 123 has an outer surface 123A disposed adjacent to the end portion of the cushion member 21, and the outer sidewall portion 121 has an outer surface 121A flush with an outer surface 21A of the cushion member 21 so as to form one and the same plane together.

In other words, the outer cover member 120 is configured such that an upper end portion of its outer wall is in a position retreating to the seat back side frame 51 side (inside) to form the lower outer sidewall portion 121 and an upper inner sidewall portion 123 of which adjacent upper and lower edges are connected by the connecting wall portion 122. Space is formed between an open side 124 of the outer cover member 120 and the sidewall *(i.e.,* the inner sidewall portion 121 and the outer sidewall portion 123), that is, a larger space S1 is formed between the outer sidewall portion 121 and the open side 124 and a smaller space S2 is formed between the inner sidewall portion 123 and the open side 124.

The control unit 33 and the inner cover member 110 are disposed in this large space S1. The inner cover member 110 and the outer cover member 120 are positioned with predetermined gaps left in left, right, front and rear directions between the inner and outer cover members 110, 120, and are both fixed to the attachment bracket 9.

As shown in FIG. 7A, a rear-side wall of the outer sidewall portion 121 is configured as a protecting wall 121B which covers, from the rear side, the hoses 34-37 routed to pass along the rear side of the seat back side frame 51 to the laterally inner side of the seat back side frame 51.

As shown in FIG. 6, in a region substantially at a center in the upward-and-downward direction of the front-side wall of the outer sidewall portion 121, the engaging portion 125 which is engageable with the upper and lower front extending portions 94 of the attachment bracket 9 is provided. At the rear-side wall (protecting wall 121B) of the outer side wall portion 121, in an upper region of an inner surface thereof, as shown in FIG. 9, a rib 126 is provided in a position corresponding to that of the upper support portion 95 of the attachment bracket 9, and in a lower region thereof, as shown in FIG. 7A, a through hole 127 is provided in a position corresponding to that of the screw hole 96B of the lower support portion 96. The rib 126 has a front end surface 126A extending obliquely from its rearwardly-retreating left edge in a frontwardly slant direction toward its right edge, and the upper support portion 95 of the attachment bracket 9 engages in this front end surface 126A.

### ATTACHMENT OF CONTROL UNIT AND COVER MEMBER

The next discussion focuses on the attachment of the control unit 33 and the cover member 100 to the left seat back side frame 51.

As shown in FIG. 6, when the control unit 33 is attached to the seat back side frame 51, first, the attachment bracket 9 is attached to the seat back side frame 51. To be more specific, a bolt 98 is inserted into the through hole 91A of the upper fixing portion 91 of the attachment bracket 9 and the through hole 51C of the seat back side frame 51, and a nut (not shown) is applied and tightened; on the other hand, a bolt 99 is inserted into the through hole 92A of the lower fixing portion 92 of the attachment bracket 9 and the through hole 51D of the seat back side frame 51, and a nut (not shown) is applied and tightened. In this way, the attachment bracket 9 is fixed by fastening (bolts and nuts) to an outer side of a lower portion of the left seat back side frame 51.

Then, the upper fixing portion 91 and the lower fixing portion 92 come in contact with the outer side of the seat back side frame 51, and at the same time, the projecting portion 93 is brought into contact with the outer side of the seat back side frame 51, and thus the attachment bracket 9 is supported at three spots on the outer side of the seat back side frame 51. Therefore, the attachment bracket 9 (and the control unit 33 and the cover member 100 attached to the attachment bracket 9, as well) can be attached with improved stability.

Moreover, the attachment bracket 9 (and the control unit 33 attached through the attachment bracket 9) is attached to the seat back side frame 51 by fastening in a position outside the recessed portion 51B (at the through hole 51C), and also attached to the seat back side frame 51 by fastening in a position at the back side of the side bracket 7 outside the welds W1-W3 to which the side bracket 7 is welded (at the through hole 51D). With this configuration, in the vehicle seat 1 configured according to this embodiment, the attachment bracket 9 and other parts to be attached through this attachment bracket 9 can be attached to the seat back side frame 51 with greater ease.

Next, the control unit 33 and the inner cover member 110 are attached to the attachment bracket 9. To be more specific, the control unit 33 is put in the inner cover member 110, and screws 119 are inserted into the through holes 112 of the inner cover member 110 and screwed in screw holes 90A of the attachment bracket 9.

In the vehicle seat 1 configured according to this embodiment, three windows 111 are provided in the inner cover member 110, and thus verification as to whether the control unit 33 is put inside without fail and whether the control unit 33 is correctly disposed in the inner cover member 110 can be conducted through these windows 111.

Lastly, the outer cover member 120 is attached to the attachment bracket 9. To be more specific, the front side (engaging portion 125) of the outer cover member 120 is engaged with the upper and lower front extending portions 94 of the attachment bracket 9, and a screw 129 is inserted into the through hole 127 in the rear side of the outer cover member 120 and screwed in the screw hole 96B provided in the lower support portion 96, as shown in FIG. 7A. Then, the rear end of the upper support portion 95 engages with the rib 126 *(see* FIG. 9). The protecting wall 121B of the outer cover member 120 attached to the attachment bracket 9 is supported at its inner side by the rear end of the upper support portion 95 and the rear side portion 96A of the lower support portion 96.

### ADVANTAGES

With the vehicle seat 1 configured as described above according to the present embodiment, the following advantageous effects can be achieved.

Since the seat back side frame 51 which constitutes the frame of the seat body 2 and thus has a high rigidity is utilized as a frame to which the control unit 33 is attached as shown in FIG. 3, the control unit 33 can be mounted with increased stability and robustness.

Since the air bag device 54 is attached to the right seat back side frame 51 and control unit 33 is attached to the left seat back side frame 51, the control unit 33 and the air bag device 54 can be arranged without the risk of interfering with each other. Moreover, unlike an alternative arrangement in which the control unit 33 and the air bag device 54 are attached to the same seat back side frame 51, the arrangement of the control unit 33 and the air bag device 54 can be designed with increased flexibility, and compact layout of the control unit 33 and the air bag device 54 can be achieved.

Since the control unit 33 and the air bag device 54 are attached to the outer side of the corresponding seat back side frames 51, and the pneumatic support cushions 31L, 31R are attached to the inner side of the seat back side frames 51, respectively, the control unit 33, the air bag device 54 and the pneumatic support cushions 31L, 31R can be arranged compactly with a reduced risk of interference between the control unit 33 and the pneumatic support cushion 31L and between the air bag device 54 and the pneumatic support cushion 31R.

Since the control unit 33 (attachment bracket 9) is attached to the seat back side frame 51 in a position outside the recessed portion 51B by fastening, as shown in FIG. 6, the control unit can be mounted relatively easily. Furthermore, since the recessed portion 51B imparts unevenness (irregularities) to the general shape of the seat back side frame 51, the rigidity of the seat back side frame 51 can be enhanced, and the control unit 33 can be installed securely and thus more robustly.

Since the control unit 33 is attached to the seat back side frame 51 in a position outside the welds W1-W3 for the side bracket 7, even in an embodiment where the side brackets 7 are provided to attach the pressure-receiving member 56, the control unit 33 can be attached to the seat back side frame 51 relatively easily.

Although the exemplary embodiment of the present invention has been described above, the present invention is not limited to this embodiment, and various changes and modifications may be made to the above-described embodiment if not thereby departing from the scope of the present invention as defined in the appended claims.

Specific configuration of the support device 3 is illustrated above by way of example, and the present invention is not limited to this illustrated configuration. For example, the number of the pneumatic support cushions for supporting an occupant's lumbar region from backward may be more than three. The pneumatic support cushions for supporting the occupant's lumbar region from the left and from the right may be provided more, that is, two or more pneumatic support cushions may be provided at each of the left and right sides. Moreover, the pump may be disposed at an outer side of one of side frames which constitute left and right frames of the seat body. The control unit 33 may be attached to the right seat back side frame 51. The vehicle seat may include two control units disposed at the left and right seat back side frames, respectively.

In the above-described embodiment, the hose 37 for supplying air from the control unit 33 to the left and right pneumatic support cushions 31L, 31R is bifurcated at some midpoint and connected to the pneumatic support cushions 31L, 31R, but the present invention is not limited to this specific configuration. For example, the present invention is consistent with an alternative embodiment modified from that shown in FIG. 3 where two separate hoses, one for supplying air from the control unit 33 to the left pneumatic support cushion 31L, the other for supplying air from the control unit 33 to the right pneumatic support cushion 31R, are provided. In this modified configuration, as well as the configuration of the above-described embodiment, the control unit 33 and the pneumatic support cushions 31L, 31R may be arranged as shown in FIG. 3 such that one of the seat back side frames 51 is sandwiched between the control unit 33 and the pneumatic support cushion 31L. In this arrangement, the distance between the control unit 33 and the pneumatic support cushion can be shortened, and thus the routing of the hose for supplying gas from the control unit 33 to the pneumatic support cushion 31L can be performed with increased ease, and the length of the hose can be shortened.

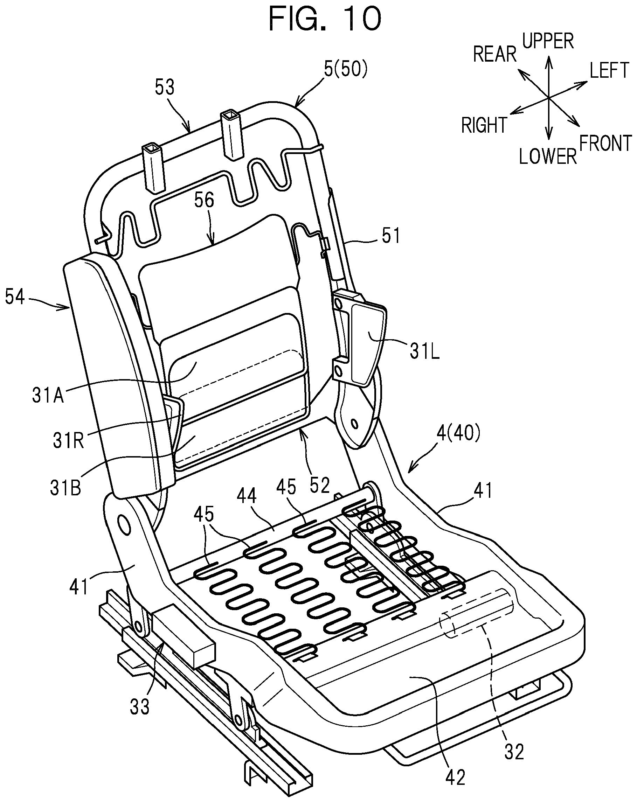

In the above-described embodiment, a side frame to which the control unit 33 is attached is embodied as the seat back side frame 51, according to the present invention as defined in claim 1. Not forming part of the invention is the example shown in FIG. 10, wherein the side frame to which the control unit 33 is attached may be a seat bottom side frame 41. The side frame may be a frame (single integral part) configured to serve as the seat bottom side frame 41 and the seat back side frame 51 of the above-described embodiment.

In the above-described embodiment, the air bag device 54 is attached to one of the left and right side frames (*i.e.,* right seat back side frame 51), and the control unit 33 is attached to the other of the left and right side frames (*i.e.,* left seat side frame 51), but the present invention is not limited to this specific configuration. For example, the control unit may be attached to the one of the left and right side frames, in a position adjacent to, and over or under the air bag device. To be more specific, the control unit may be attached to the seat back side frame to which the air bag device is attached, in a position adjacent to, and over or under the air bag device. Conversely, as shown in said embodiment of FIG. 10 not forming part of the invention, the air bag device 54 may be attached to the right seat back side frame 51, and the control unit 33 may be disposed under the air bag device and attached to the right seat bottom side frame 41. With this configuration as well, the risk of interference between the control unit and the air bag device can be reduced. Furthermore, in comparison with an alternative configuration in which the control unit and the air bag device are arranged laterally and attached to the side frame, the control unit and the air bag device, particularly one of which is attached later can be attached with ease, and thus the assembly of the vehicle seat can be performed with increased ease.

It is to be understood that specific configuration of the side brackets 7 (left and right brackets) is exemplary only, and the present invention is not limited to this specific configuration. For example, although each of the left and right brackets in the above-described embodiment has an elongate hole 71 with which the lower portion connecting wire 58 (attachment member) is engaged, an engageable piece bent in a U-shape in a side elevation of FIG. 5 may be provided instead of the elongate hole 71. The left and right brackets may be fixed to the seat back side frames by fastening using bolts and nuts. In this configuration, the portions to which the left and right brackets are fixed are the portions in which the bolts (or nuts) are located.

In the above-described embodiment, the vehicle seat 1 for an automobile or the like seat is illustrated as an example of a vehicle seat, but the vehicle seat to which the present invention is applicable is not limited to the illustrated car seat. For example, a seat for a vessel (a ship or a boat), a seat for an aircraft, or other vehicles may be advantageously configured in accordance with the present invention.

## Claims

1. A vehicle seat (1) comprising:
a seat body (2) which includes a seat bottom (4) and a seat back (5); left and right seat back side frames (51) which constitute left and right frames of the seat back (5); and
a support device (3) which is disposed inside the seat body (2) and with which an occupant's lumbar region support position is adjustable,
wherein the support device (3) includes:
a plurality of pneumatic support cushions (31A, 31B, 31L, 31R) configured to be inflatable and deflatable to change the support position;
a pump (32) configured to supply gas to the pneumatic support cushions (31A, 31B, 31L, 31R); and
a control unit (33) including a valve unit (33B) configured to regulate an inflation quantity of the pneumatic support cushions (31A, 31B, 31L, 31R),
**characterised by** the control unit (33) being attached to at least one of the left and right seat back side frames (51),
wherein the control unit (33) is attached to an outer side of the at least one of the left and right seat back side frames (51), and the plurality of pneumatic support cushions (31A, 31B, 31L, 31R) is provided at an inner side of the at least one of the left and right seat back side frames (51) to which the control unit (33) is attached.

2. The vehicle seat (1) according to claim 1, further comprising an air bag device (54) which is attached to one of the left and right seat back side frames (51),
wherein the control unit (33) is attached to the other of the left and right seat back side frames (51).

3. The vehicle seat (1) according to claim 1, further comprising an air bag device (54) which is attached to one of the left and right seat back side frames (51),
wherein the control unit (33) is attached to the one of the left and right seat back side frames (51), in a position adjacent to, and over or under the air bag device (54).

4. The vehicle seat (1) according to any one of claims 1-3, wherein at least one of the pneumatic support cushions (31L, 31R) is attached to an inner side of the at least one of the left and right seat back side frames (51) to which the control unit (33) is attached.

5. The vehicle seat (1) according to claim 1, wherein the control unit (33) and the plurality of pneumatic support cushions (31A, 31B, 31L, 31R) is arranged such that the at least one of the left and right seat back side frames (51) to which the control unit (33) and the plurality of pneumatic support cushions (31A, 31B, 31L, 31R) is attached are sandwiched between the control unit (33) and the pneumatic support cushions (31A, 31B, 31L, 31R).

6. The vehicle seat (1) according to any one of claims 1-5, wherein the at least one of the left and right seat back side frames (51) to which the control unit (33) is attached has a recessed portion (51B) which is recessed away as viewed from a side on which the control unit (33) is attached, and
wherein the control unit (33) is attached to the at least one of the left and right seat back side frames (51) by fastening in a position outside the recessed portion (51B).

7. The vehicle seat (1) according to any one of claims 1-6, further comprising:
a pressure-receiving member (56) disposed between the left and right seat back side frames (51), the pressure-receiving member (56) being configured to be movable rearward relative to the left and right seat back side frames (51); and
left and right brackets (7) which are fixed to the left and right seat back side frames (51), respectively, and to which the pressure-receiving member (56) is attached through an attachment member (58),
wherein the control unit (33) is attached to the at least one of the left and right seat back side frames (51) by fastening in a position outside portions to which the brackets (7) are fixed.

## Patentansprüche

1. Fahrzeugsitz (1), umfassend:
einen Sitzkörper (2), der einen Sitzboden (4) und einen Sitzrücken (5) beinhaltet;
linke und rechte Sitzrückenseitenrahmen (51), die linke und rechte Rahmen des Sitzrückens (5) bilden; und
eine Stützvorrichtung (3), die innerhalb des Sitzkörpers (2) angeordnet ist und mit der eine Stützposition des Lendenbereichs eines Insassen einstellbar ist,
wobei die Stützvorrichtung (3) Folgendes umfasst:
eine Vielzahl von pneumatischen Stützpolstern (31A, 31B, 31L, 31R), die dazu ausgelegt sind, aufblasbar und ablassbar zu sein, um die Stützposition zu ändern;
eine Pumpe (32), die dazu ausgelegt ist, Gas an die pneumatischen Stützpolster (31A, 31B, 31L, 31R) zu liefern; und
eine Steuereinheit (33), umfassend eine Ventileinheit (33B), die dazu ausgelegt ist, eine Aufblasmenge der pneumatischen Stützpolster (31A, 31B, 31L, 31R) zu regeln, **dadurch gekennzeichnet, dass** die Steuereinheit (33) an zumindest einem von den linken und rechten Sitzrückenseitenrahmen (51) befestigt ist,
wobei die Steuereinheit (33) an einer Außenseite von dem zumindest einen von den linken und rechten Sitzrückenseitenrahmen (51) befestigt ist und die Vielzahl von pneumatischen Stützpolstern (31A, 31B, 31L, 31R) an einer Innenseite von dem zumindest einen der linken und rechten Sitzrückenseitenrahmen (51), an dem die Steuereinheit (33) befestigt ist, bereitgestellt ist.

2. Fahrzeugsitz (1) nach Anspruch 1, ferner umfassend eine Airbag-Vorrichtung (54), die an einem der linken und rechten Sitzrückenseitenrahmen (51) befestigt ist,
wobei die Steuereinheit (33) an dem anderen der linken und rechten Sitzrückenseitenrahmen (51) befestigt ist.

3. Fahrzeugsitz (1) nach Anspruch 1, ferner umfassend eine Airbag-Vorrichtung (54), die an einem der linken und rechten Sitzrückenseitenrahmen (51) befestigt ist,
wobei die Steuereinheit (33) an einem von den linken und rechten Sitzrückenseitenrahmen (51) in einer Position neben und über oder unter der Airbag-Vorrichtung (54) befestigt ist.

4. Fahrzeugsitz (1) nach einem der Ansprüche 1-3, wobei zumindest eines der pneumatischen Stützpolster (31L, 31R) an einer Innenseite von dem zumindest einen der linken und rechten Sitzrückenseitenrahmen (51), an dem die Steuereinheit (33) befestigt ist, befestigt ist.

5. Fahrzeugsitz (1) nach Anspruch 1, wobei die Steuereinheit (33) und die Vielzahl von pneumatischen Stützpolstern (31A, 31B, 31L, 31R) so angeordnet sind, dass der zumindest eine der linken und rechten Sitzrückenseitenrahmen (51), an dem die Steuereinheit (33) und die Vielzahl von pneumatischen Stützpolstern (31A, 31B, 31L, 31R) befestigt sind, zwischen der Steuereinheit (33) und den pneumatischen Stützpolstern (31A, 31B, 31L, 31R) eingebettet ist.

6. Fahrzeugsitz (1) nach einem der Ansprüche 1-5, wobei der zumindest eine der linken und rechten Sitzrückenseitenrahmen (51), an dem die Steuereinheit (33) befestigt ist, einen ausgesparten Abschnitt (51B) hat, der in einer wegweisenden Richtung ausgespart ist, wenn eine Betrachtung von einer Seite, an der die Steuereinheit (33) befestigt ist, erfolgt, und
wobei die Steuereinheit (33) an dem zumindest einen von den linken und rechten Sitzrückenseitenrahmen (51) durch Fixieren in einer Position außerhalb des ausgesparten Abschnitts (51B) befestigt ist.

7. Fahrzeugsitz (1) nach einem der Ansprüche 1-6, ferner umfassend:
ein druckaufnehmendes Element (56), das zwischen den linken und rechten Sitzrückenseitenrahmen (51) angeordnet ist, wobei das druckaufnehmende Element (56) dazu ausgelegt ist, in Bezug auf die linken und rechten Sitzrückenseitenrahmen (51) nach hinten beweglich zu sein; und
linke und rechte Konsolen (7), die jeweils an den linken und rechten Sitzrückenseitenrahmen (51) angebracht sind, und an denen das druckaufnehmende Element (56) durch ein Befestigungselement (58) befestigt ist,
wobei die Steuereinheit (33) an dem zumindest einen von den linken und rechten Sitzrückenseitenrahmen (51) durch Fixieren in einer Position außerhalb von Abschnitten, an denen die Konsolen (7) angebracht sind, befestigt ist.

## Revendications

1. Siège de véhicule (1) comprenant :
un corps de siège (2) comprenant un fond de siège (4) et un dossier de siège (5) ;
des armatures latérales de dossier de siège gauche et droite (51) qui constituent les armatures gauche et droite du dossier de siège (5) ; et
un dispositif de soutien (3) disposé à l'intérieur du corps de siège (2) et au moyen duquel la position de soutien de la zone lombaire d'un occupant peut être réglée,
ledit dispositif de soutien (3) comprenant :
une pluralité de coussins de soutien pneumatiques (31A, 31B, 31L, 31R) configurés pour être gonflables et dégonflables afin de modifier la position de soutien ;
une pompe (32) configurée pour fournir du gaz aux coussins de soutien pneumatiques (31A, 31B, 31L, 31R) ; et
une unité de commande (33) comprenant une unité de soupape (33B) configurée pour réguler une quantité de gonflage des coussins de soutien pneumatiques (31A, 31B, 31L, 31R),
**caractérisé par** l'unité de commande (33) étant fixée à au moins l'une des armatures latérales de dossier de siège gauche et droite (51),
ladite unité de commande (33) étant attachée à un côté externe de la au moins une des armatures latérales de dossier de siège gauche et droite (51) et la pluralité de coussins de soutien pneumatiques (31A, 31B, 31L, 31R) étant disposés au niveau d'un côté interne de la au moins une des armatures latérales de dossier de siège gauche et droite (51) à laquelle l'unité de commande (33) est attachée.

2. Siège de véhicule (1) selon la revendication 1, comprenant en outre un dispositif d'airbag (54) attaché à l'une des armatures latérales de dossier de siège gauche et droite (51),
ladite unité de commande (33) étant attachée à l'autre des armatures latérales de dossier de siège gauche et droite (51).

3. Siège de véhicule (1) selon la revendication 1, comprenant en outre un dispositif d'airbag (54) attaché à l'une des armatures latérales de dossier de siège gauche et droite (51),
ladite unité de commande (33) étant attachée à l'une des armatures latérales de dossier de siège gauche et droite (51), dans un emplacement adjacent au le dispositif d'airbag (54) et sur ou sous celui-ci.

4. Siège de véhicule (1) selon l'une quelconque des revendications 1 à 3, au moins l'un des coussins de soutien pneumatiques (31L, 31R) étant attaché à un côté interne de la au moins une des armatures latérales de dossier de siège gauche et droite (51) à laquelle l'unité de commande (33) est attachée.

5. Siège de véhicule (1) selon la revendication 1, ladite unité de commande (33) et ladite pluralité de coussins de soutien pneumatiques (31A, 31B, 31L, 31R) étant agencés de sorte que la au moins une des armatures latérales de dossier de siège gauche et droite (51) à laquelle l'unité de commande (33) et la pluralité de coussins de soutien pneumatiques (31A, 31B, 31L, 31R) sont attachés soit intercalée entre l'unité de commande (33) et les coussins de soutien pneumatiques (31A, 31B, 31L, 31R).

6. Siège de véhicule (1) selon l'une quelconque des revendications 1 à 5, ladite au moins une des armatures latérales de dossier de siège gauche et droite (51) à laquelle l'unité de commande (33) est attachée possédant une partie enfoncée (51B) qui est enfoncée en retrait lorsque elle est vue depuis le côté sur lequel l'unité de commande (33) est attachée, et
ladite unité de commande (33) étant attachée à la au moins une des armatures latérales de dossier de siège gauche et droite (51) par une fixation dans une position à l'extérieur de la partie enfoncée (51B).

7. Siège de véhicule (1) selon l'une quelconque des revendications 1 à 6, comprenant en outre :
un élément de réception de pression (56) disposé entre les armatures latérales de dossier de siège gauche et droite (51), ledit élément de réception de pression (56) étant configuré pour être mobile vers l'arrière par rapport aux armatures latérales de dossier de siège gauche et droite (51) ; et
des pattes de fixation gauche et droite (7) qui sont fixés aux armatures latérales de dossier de siège gauche et droit (51), respectivement, et auquel l'élément de réception de pression (56) est attaché à travers un élément d'attache (58),
ladite unité de commande (33) étant attachée à la au moins une des armatures latérales de dossier de siège gauche et droite (51) par une fixation dans une position à l'extérieur des parties auxquelles les pattes de fixation (7) sont fixées.
